# FASCICULE DE BREVET EUROPEEN

(11) **EP 0 635 789 B1**
(45) Date de publication et mention de la délivrance du brevet: **10.03.1999**
(21) Numéro de dépôt: 94401589.0
(22) Date de dépôt: 08.07.1994
(51) Int. Cl.: G06F 11/22, G06F 11/273

(54) **Circuit intégré du type microcontrôleur à mémoire morte contenant un programme générique, notamment de test, station de test et procédé de fabrication correspondants**
Mikrokontroller Integrierteschaltung mit Festprogramm enthaltenden Festwertspeicher, Teststation und entsprechendes Herstellungsverfahren
Microcontroller integrated circuit with read only memory containing test program, test station and corresponding manufacturing process

(30) Priorité: 13.07.1993 FR 9308626
(43) Date de publication de la demande: 25.01.1995
(73) Titulaire: ALCATEL, 75008 Paris (FR)
(72) Inventeur: Balbinot, Jean-Pierre, F-94270 le Kremlin Bicetre (FR)
(74) Mandataire: El Manouni, Josiane

(56) Documents cités:
- FR-A- 2 589 264
- US-A- 4 797 808
- US-A- 5 157 781

## Description

Le domaine de l'invention est celui des circuits intégrés électroniques.

Plus précisément, l'invention concerne un circuit intégré du type microcontrôleur. Un microcontrôleur est un circuit généralement intégré à très grande échelle (ou VLSI pour "Very Large Scale Integration" en anglo-saxon) rassemblant soit la totalité, soit la plupart des éléments constitutifs d'un "ordinateur". Sa fonction n'est pas définie à priori mais dépend du programme qu'il exécute, ce qui lui confère un grand degré de généralité du point de vue de ses applications possibles.

Un microcontrôleur comprend nécessairement un coeur de processeur, constitué notamment d'un séquenceur de commandes (qui est un automate distribuant différents signaux de commande vers les autres éléments en fonction d'instructions d'un programme), une unité arithmétique et logique (permettant de traiter les données) et des registres (qui sont des éléments de mémoire spécialisés).

Par contre, les autres éléments constitutifs de l"'ordinateur" peuvent être soit internes, soit externes au microcontrôleur. En d'autres termes, les autres éléments sont soit intégrés dans le microcontrôleur, soit intégrés dans des circuits annexes.

Ces autres éléments constitutifs de l'"ordinateur" sont des éléments de stockage et/ou de traitement de données, tels que, par exemple, des mémoires (mortes ou vives) contenant notamment le programme à exécuter, des horloges et des interfaces (séries ou parallèles).

D'une façon générale, un système construit autour d'un microcontrôleur comprend donc un boîtier dans lequel est monté le microcontrôleur ainsi qu'une pluralité de boîtiers correspondant aux éléments externes de stockage et/ou de traitement de données qui ne sont pas intégrés dans le microcontrôleur. Un tel système à microcontrôleur se présente par exemple sous la forme d'une ou plusieurs cartes sur lesquelles sont montés le microcontrôleur et les autres composants.

C'est le programme applicatif, c'est-à-dire le programme qui est exécuté par le microcontrôleur, qui détermine le fonctionnement de l'ensemble du système à microcontrôleur. Chaque programme applicatif est donc propre à une application distincte.

Dans la plupart des applications actuelles, le programme applicatif est trop volumineux pour être contenu dans le microcontrôleur et il est donc stocké dans une mémoire externe au microcontrôleur. Cette mémoire-programme, qui est uniquement destinée à être lue, est généralement une mémoire morte reprogrammable n'autorisant que la lecture (ou REPROM pour "REprogrammable Read Only Memory" en anglo-saxon).

Après que le programme applicatif a été chargé en mémoire puis lancé afin d'être exécuté par le microcontrôleur, il se peut que le fonctionnement du système à microcontrôleur ne soit pas celui prévu.

Dans la situation la plus favorable, il s'agit d'un léger dysfonctionnement du système, et le microcontrôleur peut quand même, par l'intermédiaire d'une interface (série ou parallèle), dialoguer avec une station de test. Cette station de test est alors capable de déterminer la nature du problème et indiquer avec précision le type de correction (logicielle et/ou physique) à apporter au système afin qu'il fonctionne correctement.

Malheureusement, la plupart des cas de dysfonctionnement d'un système à microcontrôleur se traduisent par un blocage complet de ce système, interdisant tout dialogue avec une station de test. Il est alors impossible de déterminer le type de panne, à savoir une panne physique (du microcontrôleur lui-même, d'une mémoire morte externe, d'un périphérique, d'un bus, etc...) ou logicielle (c'est-à-dire une erreur dans le programme applicatif). La technique de dépannage généralement mise en oeuvre dans de tels cas de blocage repose sur l'utilisation de dispositifs de tests sophistiqués nécessitant la pose de sondes sur les broches des différents circuits intégrés du système à microcontrôleur à tester.

L'utilisation de tels dispositifs de test pour le dépannage d'un système à microcontrôleur présente plusieurs inconvénients. En effet, les sondes utilisées dans ces dispositifs de test sont très fragiles, difficiles à poser du fait de la taille restreinte des circuits et de leur montage très rapproché, et peuvent présenter des mauvais contacts.

De plus, du fait de leur coût élevé, ces dispositifs de test sont fabriqués en série limitée. Par conséquent, les systèmes à microcontrôleur en panne ne peuvent pas être réparés immédiatement n'importe où mais doivent auparavant être acheminés vers un des lieux où se trouve un dispositif de test.

En définitive, un tel dépannage d'un système à microcontrôleur est long, fastidieux et coûteux.

Par ailleurs, afin de ne pas avoir à intervenir directement sur le système à microcontrôleur lors de chaque changement de programme applicatif exécuté par le microcontrôleur de ce système, on utilise de façon classique une mémoire morte téléchargeable pour stocker le programme applicatif, un programme de chargement étant inscrit dans une mémoire morte masquée du microcontrôleur. La mémoire morte masquée du microcontrôleur est une mémoire à lecture seule, intégrée dans le microcontrôleur et programmée de façon définitive lors de la fabrication de ce microcontrôleur.

Ainsi, pour changer de programme applicatif, on réinitialise le microcontrôleur en lançant le programme de téléchargement. Ce programme de téléchargement peut alors communiquer avec une station de travail reliée au microcontrôleur par une ligne de transmission adéquate, cette station de travail contenant le nouveau programme applicatif à inscrire. Le programme de téléchargement reçoit le nouveau programme applicatif et le charge dans une mémoire morte externe au microcontrôleur.

Un tel dispositif est connu du document FR-A-2589264.

Cette solution, si elle évite une intervention directe sur le système à microcontrôleur (intervention qui consisterait à ôter du système les mémoires mortes reprogrammables contenant le programme applicatif, à inscrire dans ces mémoires le nouveau programme applicatif grâce à un dispositif de programmation approprié, puis à les replacer dans le système), présente néanmoins un inconvénient majeur, à savoir une spécialisation du microcontrôleur lors de sa fabrication.

En effet, chaque type de mémoire reprogrammable est associé à un programme de téléchargement distinct puisque les paramètres de programmation (tension à appliquer, durée de maintien de cette tension, etc...) varient en fonction de la technologie mise en oeuvre. Le programme de téléchargement étant inscrit de façon définitive dans la mémoire interne masquée du microcontrôleur, ce microcontrôleur se trouve limité, quant à ses possibilités d'utilisation, au type de composants mémoire pour lequel ce programme de téléchargement est prévu. En d'autres termes, ce microcontrôleur n'est pas un composant standard et son coût de production s'en trouve augmenté.

L'invention a notamment pour objectif de pallier ces différents inconvénients de l'état de la technique.

Plus précisément, un objectif de l'invention est de fournir un circuit du type microcontrôleur qui permette de vérifier de façon rapide, simple, fiable et peu coûteuse le fonctionnement d'un système construit autour de ce microcontrôleur.

Un autre objectif de l'invention est de fournir un tel circuit intégré à microcontrôleur qui permette, lors d'un dysfonctionnement d'un système mettant en oeuvre ce microcontrôleur, de localiser avec précision le ou les éléments défectueux du système.

L'invention a également pour objectif de fournir un tel circuit intégré du type microcontrôleur qui évite toute intervention directe sur le système à microcontrôleur lors d'un changement de programme applicatif, tout en restant standard en ce qui concerne le type de composants mémoire avec lequel il peut être mis en oeuvre dans un système.

Ces objectifs, ainsi que d'autres qui apparaîtront par la suite, sont atteints selon l'invention à l'aide d'un circuit intégré du type microcontrôleur comprenant un coeur de processeur susceptible d'échanger des données avec au moins un élément de stockage et/ou de traitement de données,
ledit circuit intégré comprenant une mémoire morte à lecture seule contenant un programme générique pouvant être exécuté par ledit microcontrôleur, et des moyens de communication permettant la mise en oeuvre d'un protocole de dialogue entre ledit programme générique et une station reliée audit circuit intégré, ledit programme générique incluant une fonction élémentaire d'écriture de données dans le ou lesdits éléments de stockage et/ou de traitement de données, et ladite fonction d'écriture étant utilisée pour le chargement d'un programme de téléchargement à partir de ladite station, en mémoire vive.

Les éléments de stockage et/ou de traitement des données sont soit intégrés au microcontrôleur (c'est-à-dire au circuit intégré du type microcontrôleur comprenant le coeur de processeur), soit externes au microcontrôleur et intégrés dans des circuits distincts.

Dans un mode de réalisation préférentiel de l'invention, ladite mémoire morte contenant le programme générique est une mémoire morte masquée programmée par masque de façon définitive lors de la fabrication dudit circuit intégré.

Ainsi, contrairement aux microcontrôleurs de l'état de la technique dont la mémoire morte masquée contient, quand elle existe, soit un programme applicatif (si celui-ci est de taille réduite), soit un programme de téléchargement (lié à un type de composants mémoire), le microcontrôleur selon l'invention possède une mémoire masquée contenant un programme générique, notamment de test.

En outre, lorsque ledit programme générique est un programme générique de test, on peut ainsi effectuer un test déporté à partir de la station de test, le programme générique de test fournissant à la station, lorsque celle-ci les lui demande, toutes les informations concernant le microcontrôleur et son environnement.

De cette façon, on peut tester le microcontrôleur avec son environnement, indépendamment du programme applicatif. Un tel test peut être effectué soit avant le lancement du programme applicatif, soit après le lancement du programme applicatif si le système dans lequel est mis en oeuvre le microcontrôleur tombe en panne ou présente un dysfonctionnement.

Dans un mode de réalisation préférentiel de l'invention, ledit programme générique inclut en outre une fonction élémentaire de lecture de données stockées par le ou lesdits éléments de stockage et/ou de traitement de données.

Dans un mode de réalisation préférentiel de l'invention, ledit programme générique inclut en outre une fonction élémentaire d'exécution d'un programme écrit dans le ou lesdits éléments de stockage et/ou de traitement de données.

Ainsi le programme générique peut être de très faible taille et donc être facilement intégré dans le microcontrôleur.

Ces trois fonctions élémentaires permettent de tester complètement le microcontrôleur seul ou avec son environnement.

Avantageusement, le ou lesdits éléments de stockage et/ou de traitement de données appartiennent au groupe comprenant notamment:
- les mémoires mortes reprogrammables à lecture seule, qui sont programmables à plusieurs reprises après la fabrication dudit circuit intégré;
- les mémoires vives à accès aléatoire;
- les horloges;
- les périphériques.

Ainsi, la fonction de lecture permet de vérifier le contenu de la mémoire morte stockant (ou destinée à stocker) le programme applicatif, de tester les informations acquises par les différents périphériques, et, en combinaison avec la fonction d'écriture, de tester la validité de la mémoire vive.

La fonction d'écriture, qui n'utilise avantageusement pas de mémoire vive, permet de valider les différents périphériques et la mémoire vive. L'écriture permet donc de charger dans la mémoire vive n'importe quel programme, et notamment un programme d'autotest plus puissant (après s'être assuré que le microcontrôleur et son environnement sont capables d'effectuer correctement les fonctions de base), ou encore un programme quelconque de téléchargement de la mémoire morte qui permet une adaptation dynamique du système à microcontrôleur par modification de son programme applicatif. Le fait que le programme de téléchargement que l'on écrit en mémoire vive puisse être quelconque est très important puisque cela signifie que le microcontrôleur de l'invention n'est pas lié à un type particulier de composants mémoire: le microcontrôleur de l'invention est un produit standard, et donc de faible coût.

La fonction d'exécution permet d'exécuter un programme écrit en mémoire vive grâce à la fonction d'écriture.

L'ensemble de ces trois fonctions permet d'effectuer toutes sortes de tests, et même de dépannage lors de la phase de production.

Préférentiellement, le groupe de fonctions élémentaires constituant ledit programme générique comprend également la mesure de la vitesse de transmission de données de ladite station, de façon que lesdits moyens de communication adaptent la vitesse de transmission de données dudit circuit intégré à ladite vitesse de transmission de données de ladite station.

Ainsi, on diminue la complexité de la station puisque celle-ci transmet ses données toujours à la même vitesse, quelle que soit la vitesse de fonctionnement du microcontrôleur auquel elle est reliée.

Avantageusement, lesdits moyens de communication correspondent à une Unité Asynchrone de Réception/Transmission dont seuls les signaux de réception et de transmission sont utilisés.

En effet, les microcontrôleurs intègrent de façon classique une telle Unité Asynchrone de Réception/Transmission (UART).

De façon préférentielle, lesdits moyens de communication comprennent une interface série et ledit programme générique reçoit de ladite station des messages d'activation soit d'une desdites fonctions élémentaires, soit d'une fonction de positionnement d'un pointeur, et émet vers ladite station des messages de résultat de l'activation d'une desdites fonctions élémentaires.

L'interface série est par exemple une interface RS232.

Avantageusement, lesdits messages d'activation appartiennent au groupe comprenant:
- les messages de spécification d'une adresse prédéterminée pour un pointeur courant, constitués chacun par, d'une part, un mot de commande de spécification d'adresse dans lequel est codé le nombre d'octets de spécification et, d'autre part, au moins un mot de données contenant lesdits octets de spécification;
- les messages de lecture d'une mémoire à partir de l'adresse du pointeur courant, constitués chacun par, un mot de commande, de lecture dans lequel est codé un nombre d'octets à lire;
- les messages d'écriture dans une mémoire à partir de l'adresse du pointeur courant, constitués chacun par, d'une part, un mot de commande d'écriture dans lequel est codé un nombre d'octets à écrire et, d'autre part, au moins un mot de données contenant lesdits octets à écrire ;
- les messages d'exécution d'un programme stocké dans une mémoire à partir de l'adresse du pointeur courant, constitués chacun par un mot de commande d'exécution.

De façon avantageuse, chacun desdits messages de résultat est constitué d'au moins un mot de données contenant des données lues.

En d'autres termes, les messages d'activation sont constitués d'un mot de commande éventuellement suivi d'un ou plusieurs mots de données, et les messages de résultat sont constitués d'un ou plusieurs mots de données.

Avantageusement, chacun des mots de commande et des mots de données comprend au moins un élément binaire de départ, au moins un élément binaire de données utiles et au moins un élément binaire de stop.

De cette façon, on sécurise la transmission de données entre le programme générique du microcontrôleur et la station.

Préférentiellement, chacun desdits mots de commande comprend huit éléments binaires de données utiles répartis en:
- deux éléments binaires de codage du type de mot de commande; et
- six éléments binaires de codage d'un nombre d'octets de spécification, d'octets à lire et d'octets à écrire selon que le mot de commande codé dans les deux autres éléments binaires est respectivement un mot de commande de spécification, un mot de commande de lecture ou un mot de commande d'écriture.

Dans un mode réalisation avantageux de l'invention, ledit circuit intégré comprend une broche de lancement dudit programme générique, notamment de test, ledit programme générique, notamment de test, étant lancé lorsque ladite broche de lancement est excitée après que ledit circuit intégré a été réinitialisé.

Ainsi, la broche de lancement permet d'indiquer au microcontrôleur qu'il doit passer en mode test, c'est-à-dire lancer l'exécution du programme générique de test.

L'invention concerne également un procédé de fabrication d'un circuit intégré du type microcontrôleur, ledit procédé comprenant une étape de gravure d'une mémoire morte masquée contenant ledit programme générique, notamment de test.

L'invention concerne également une station de test de circuit intégré destiné à tester un circuit intégré selon l'invention, ladite station comprenant des moyens d'émission de messages d'activation et de réception de messages de résultat.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un système construit autour d'un exemple de microcontrôleur selon l'invention, ce système à microcontrôleur étant rélié à une station de test ;
- la figure 2 présente un schéma simplifié d'un mode de réalisation d'un programme générique de test tel que contenu dans la mémoire morte masquée d'un microcontrôleur selon l'invention ;
- la figure 3 présente un mode de réalisation de la structure d'un mot de commande échangé entre la station de test et le microcontrôleur selon l'invention tels qu'apparaîssant sur la figure 1 ;
- la figure 4 présente un mode de réalisation de la structure d'un mot de données échangé entre la station de test et le microcontrôleur selon l'invention tels qu'apparaîssant sur la figure 1 ;
- les figures 5 à 8 présentent chacune un exemple de dialogue entre le microcontrôleur selon l'invention et la station de test tels qu'apparaîssant sur la figure 1, respectivement dans le cas :
   * d'un positionnement d'un pointeur ;
   * d'une lecture d'une mémoire ;
   * d'une écriture dans une mémoire ;
   * d'une exécution d'un programme.

A titre d'exemple, dans cette description, ledit programme générique est un programme générique de test et ladite mémoire morte contenant ce programme générique est une mémoire morte masquée programmée par masque de façon définitive lors de la fabrication dudit circuit intégré.

L'invention concerne donc un circuit intégré du type microcontrôleur (appelé plus simplement microcontrôleur dans la suite de la description).

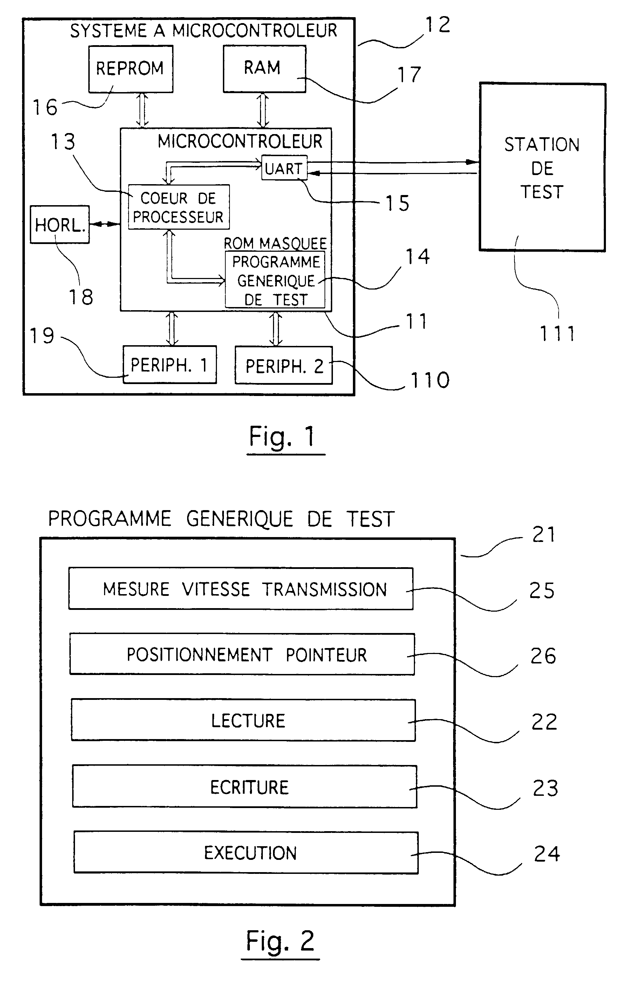

La figure 1 présente un mode de réalisation particulier d'un microcontrôleur 11 selon l'invention ainsi que d'un système 12 bâti autour de ce microcontrôleur 11.

Dans ce mode de réalisation particulier, le microcontrôleur 11 comprend un minimum d'éléments, à savoir :
- un coeur de processeur 13 ;
- une mémoire morte masquée 14 à lecture seule, programmée par masque de façon définitive lors de la fabrication du microcontrôleur, et
- une UART 15 (Unité Asynchrone de Réception/Transmission).

Les autres éléments de stockage et/ou de traitement de données permettant le fonctionnement du microcontrôleur 11 sont, dans cet exemple, externes au microcontrôleur 11 et constituent avec ce dernier un système 12 à microcontrôleur. Dans ce mode de réalisation particulier, les éléments de stockage et/ou de traitement des données sont :
- une mémoire morte reprogrammable à lecture seule 16 (REPROM, pour "REprogrammable Read Only Memory" en anglo-saxon), programmable à plusieurs reprises après la fabrication du microcontrôleur 11 et destinée à stocker le programme applicatif exécuté par le microcontrôleur 11 et définissant la fonction de celui-ci et plus généralement de l'ensemble du système 12 ;
- une mémoire vive à accès aléatoire (RAM, pour "Random Acces Memory" en anglo-saxon) utilisée lors de l'exécution d'un programme par le microcontrôleur 11 ;
- une horloge 18 ;
- deux périphériques 19, 110.

Il est clair que le microcontrôleur selon l'invention n'est pas limité à ce mode de réalisation particulier. Ainsi, dans d'autres modes de réalisation, la totalité ou certains des éléments de stockage et/ou de traitement de données 16 à 110 peuvent être intégrés au microcontrôleur.

De même, d'autres types d'éléments de stockage et/ou de traitement de données (internes ou externes au microcontrôleur 11) peuvent être mis en oeuvre.

La mémoire morte masquée du microcontrôleur 11 contient un programme générique de test.

Dans un mode de réalisation préférentiel, dont un schéma simplifié est présenté sur la figure 2, ce programme générique de test 21 est constitué de plusieurs fonctions élémentaires, à savoir notamment :
- la lecture 22 de données stockées dans certains des éléments de stockage et/ou de traitement de données, tels que la mémoire morte reprogrammable 16, la mémoire vive 17 ou encore les périphériques 19, 110 ;
- l'écriture 23 de données dans certains des éléments de stockage et/ou de traitement de données, tels que la mémoire vive 17 ou les périphériques 19, 110 ;
- l'exécution 24 d'un programme écrit dans un des éléments de stockage et/ou de traitement de données, tels que la mémoire vive 17.

Dans ce mode de réalisation, le programme générique de test 21 comprend également deux autres fonctions élémentaires, à savoir la mesure 25 d'une vitesse de transmission et le positionnement 26 d'un pointeur, qui seront expliquées en détail par la suite.

Ce programme générique de test 21 permet de vérifier et valider soit le microcontrôleur 11 seul, soit le microcontrôleur 11 et son environnement (c'est-à-dire le système 12 à microcontrôleur).

En effet ce programme générique de test 21 permet de tester et valider chacun des éléments constituant le système à microcontrôleur.

Dans une première phase, on peut s'assurer du bon fonctionnement du microcontrôleur 11 seul, c'est-à-dire avant qu'il soit placé dans le système 12 afin de coopérer avec les éléments de stockage et/ou de traitement de données 16 à 110. Dans une seconde phase, on peut s'assurer du bon fonctionnement du système 12 tel que vu par le microcontrôleur.

Ces deux phases préalables de test et validation ne nécessitent pas la présence d'un programme applicatif en mémoire (morte 16 ou vive 17). Il suffit en effet d'indiquer au microcontrôleur 11 qu'il doit passer en mode test, mode dans lequel il exécute le programme générique de test (par opposition au mode normal de fonctionnement dans lequel il exécute le programme applicatif contenu en mémoire). Dans un mode de réalisation particulier de l'invention, le microcontrôleur 11 comprend une broche de lancement (non représentée), le programme générique de test étant lancé lorsque cette broche de lancement est excitée après que le microcontrôleur a été réinitialisé (c'est-à-dire après un reset).

Il est à noter que le microcontrôleur 11 et son environnement (éléments externes 16 à 110) peuvent également être testés et validés lors d'un dysfonctionnement du système 12 pendant l'exécution du programme applicatif.

Enfin, grâce à la fonction élémentaire d'écriture 23, on peut écrire en mémoire vive un programme de test (ou d'autotest) plus complexe que le programme générique de test 21, mais qui suppose, pour son exécution correcte, que le microcontrôleur 11 et son environnement fonctionnent en ce qui concerne l'exécution des fonctions élémentaires 22 à 24.

Le programme applicatif, c'est-à-dire le programme exécuté par le microcontrôleur 11 et qui lui confère sa fonction, est généralement inscrit dans une mémoire après que le microcontrôleur 11 et son environnement ont été testés et validés.

Le programme générique de test 21 du microcontrôleur de l'invention offre plusieurs possibilités pour stocker en mémoire le programme applicatif.

Une première solution consiste à stocker le programme applicatif directement en mémoire vive 17, grâce à la fonction élémentaire d'écriture 23.

Une seconde solution, plus performante car durable, consiste à stocker le programme applicatif indirectement en mémoire morte 16, en stockant préalablement en mémoire vive 17 un programme de téléchargement de cette mémoire morte 16. Il est clair que n'importe quel type de programme de téléchargement (et donc n'importe quel type de mémoire reprogrammable) peut être utilisé puisque le programme générique de test l'inscrit dans la mémoire vive 17 comme n'importe quel autre programme (en d'autres termes, le contenu du programme inscrit est transparent pour la fonction d'écriture 23 du programme générique de test 21). Ainsi, le microcontrôleur 11 de l'invention peut être adapté dynamiquement à son contexte applicatif (possibilité de télécharger la mémoire morte) tout en étant un produit standard (aucune limitation à un type quelconque de mémoire reprogrammable).

Comme présenté sur la figure 1, le microcontrôleur 11 est généralement relié à une station de test 111, par exemple par une liaison série RS232. A cet effet, le microcontrôleur et la station de test comprennent chacun des moyens de communication permettant la mise en oeuvre d'un protocole de dialogue. La station de test 111 est par exemple un micro-ordinateur compatible PC.

Dans le mode de réalisation particulier de l'invention présenté en relation avec les figures 1 et 2, le programme générique de test 21 comprend une fonction élémentaire de mesure 25 de la vitesse de transmission de la station de test 111. Ainsi la vitesse de transmission des moyens de communication 15 du microcontrôleur 11 est choisie de façon à égaler celle de la station de test 11, et est donc indépendante de l'horloge 18 du système 12. Les moyens 15 de communication correspondent par exemple à une Unité Asychrone de Réception/ Transmission (UART) dont seul les signaux de réception Rx et de transmission Tx sont utilisés.

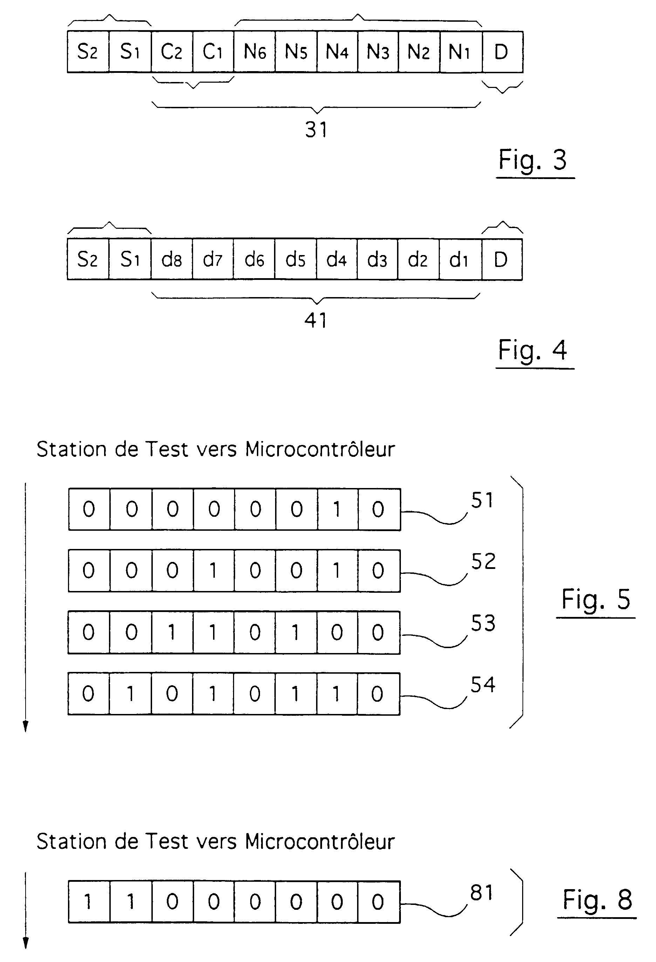

Un exemple de protocole d'échange de données entre le microcontrôleur 11 et la station de test 111 est maintenant présenté en relation avec les figures 3 à 8.

La station de test 111 émet vers le microcontrôleur 11 des messages d'activation d'une des quatres fonctions élémentaires suivantes : lecture 22, écriture 23, exécution 24 et positionnement d'un pointeur 26 du programe générique de test 21.

En retour, le programme générique de test 21 émet vers la station de test 111 des messages de résultat de l'activation d'une desdites fonctions élémentaires.

Un message d'activation est constitué d'un mot de commande éventuellement suivi d'un ou plusieurs mots de données. Un message de résultat est constitué d'un ou plusieurs mots de données.

La figure 3 présente un mode de réalisation de la structure d'un mot de commande. Dans cet exemple, un mot de commande est constitué d'un élément binaire (noté e.b. par la suite) de départ D, un octet 31 de données utiles répartis en six e.b. N1 à N6 de codage du type de mot de commande, et deux e.b. de stop S1, S2.

Le codage du type de mot de commande est le suivant :
- 00 correspond à la commande de positionnement 26 d'un pointeur ;
- 01 correspond à la commande de lecture 22 ;
- 10 correspond à la commande d'écriture 23 ;
- 11 correspond à la commande d'exécution 24.

La figure 4 présente un mode de réalisation de la structure d'un mot de données. Dans cet exemple, un mot de données est constitué d'un e.b. de départ D, un octet 41 de données utiles et deux e.b. de stop S1,S2.

Le nombre codé en binaire dans les e.b. N1 à N6 est égal au nombre d'octets à coder (noté N) moins un (c'est-à-dire N-1).

Ce nombre à coder N est :
- un nombre d'octets dans lesquels est spécifiée l'adresse à laquelle doit être positionné un pointeur courant, dans le cas d'un mot de commande de positionnement ;
- un nombre d'octets à lire, à partir de l'adresse du pointeur courant, dans le cas d'un mot de commande de lecture ;
- un nombre d'octets à écrire à partir de l'adresse du pointeur courant dans le cas d'un mot de commande d'écriture.

Les figures 5 à 8 présentent chacune un exemple de dialogue entre le microcontrôleur de l'invention et la station de test. Dans un souci de simplification, seuls les octets de données utiles sont représentés (les e.b. de départ D et de stop S1, S2 ne transportant aucune information utile).

La figure 5 correspond au cas de la spécification par la station test d'une adresse sur laquelle doit être positionnée le pointeur courant du microcontrôleur, cette adresse spécifiée étant l'adresse mémoire à partir de laquelle vont être exécutée l'une des trois fonctions élémentaires de lecture, d'écriture ou exécution.

Dans cet exemple, l'adresse spécifiée est 123456 et chaque chiffre spécifiant l'adresse est codé sur quatre e.b.

Ainsi, la station de test envoie d'abord un mot de commande S1 indiquant qu'il s'agit d'une commande de positionnement (C2C1=00) et que l'adresse est codée sur N=3 octets (N6 à N1 = (10)binaire = 2 = N-1), puis trois mots de données 52 à 54 contenant l'adresse (0001, 0010, 0011, 0100, 0101 et 0110 correspondant respectivement au codage de 1,2,3,4,5et 6).

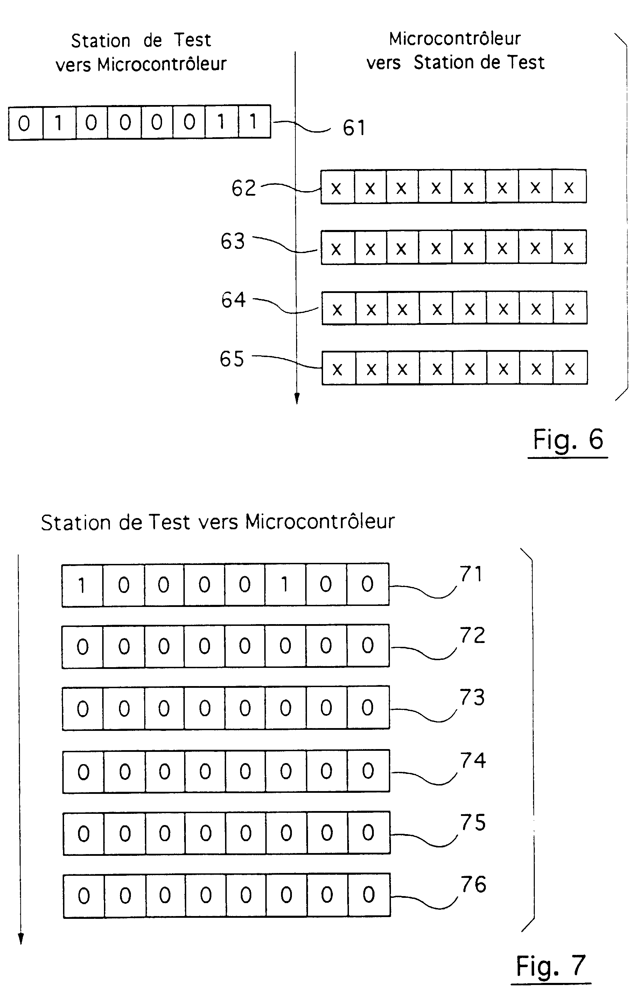

La figure 6 correspond au cas de la commande par la station de test d'une lecture d'octets par le microcontrôleur à partir de l'adresse du pointeur courant.

Dans cet exemple, la station émet un mot de commande 61 indiquant qu'il s'agit d'une lecture (C2C1 = 01) et qu'il y a N = 4 (N6 à N1 = (11) binaire = 3 = N-1) octets à lire. Puis le microcontrôleur envoie à la station de test les quatre mots de données 62 à 65 contenant les données lues (e.b. notés x pour indiquer une valeur quelconque).

La figure 7 correspond au cas de la commande par la station de test d'une écriture d'octets par le microcontrôleur à partir de l'adresse du pointeur courant.

Dans cet exemple, la station de test émet d'abord un mot de commande 71 indiquant qu'il s'agit d'une écriture (C2C1 = 10) et qu'il y a N=5 (N6 àN1 = (100) binaire = 4 = N-1) octets à écrire, puis cinq mots de données 72 à 76 contenant les données à écrire (0 pour tous les e.b. dans cet exemple).

La figure 8 correspond au cas de la commande par la station de test d'une exécution par le microcontrôleur d'un programme stocké à partir de l'adresse du pointeur courant. Ainsi, la station de test émet un mot de commande 81 indiquant qu'il s'agit d'une exécution (C2C1 = 11).

L'invention concerne également un procédé de fabrication d'un circuit intégré du type microcontrôleur tel que présenté précédemment à travers un mode de réalisation particulier. Ce procédé comprend une étape de gravure de la mémoire morte masquée contenant le programme générique de test.

## Revendications

1. Circuit intégré du type microcontrôleur comprenant un coeur de processeur (13) susceptible d'échanger des données avec au moins un élément de stockage et/ou de traitement de données (16 à 19, 110),
caractérisé en ce que ledit circuit intégré (11) comprend une mémoire morte (14) à lecture seule contenant un programme générique (21), pouvant être exécuté par ledit microcontrôleur (11), et des moyens de communication (15) permettant la mise en oeuvre d'un protocole de dialogue entre ledit programme générique (21), et une station (111), reliée audit circuit intégré (11), ledit programme générique (21) incluant une fonction élémentaire d'écriture (23) de données dans le ou lesdits éléments de stockage et/ou de traitement de données (16 à 19, 110), et ladite fonction d'écriture étant utilisée pour le chargement d'un programme de téléchargement à partir de ladite station en mémoire vive (17).

2. Circuit intégré selon la revendication 1, caractérisé en ce que ledit programme générique inclut en outre une fonction élémentaire de lecture (22) de données stockées par le ou lesdits éléments de stockage et/ou de traitement de données (16 à 19, 110).

3. Circuit intégré selon l'une des revendications 1 et 2, caractérisé en ce que ledit programme générique inclut en outre une fonction élémentaire d'exécution (24) d'un programme écrit dans le ou lesdits éléments de stockage et/ou de traitement de données (16 à 19, 110).

4. Circuit intégré selon l'une quelconque des revendications 1 àt 3, caractérisé en ce que le ou lesdits éléments de stockage et/ou de traitement de données appartiennent au groupe comprenant notamment :
- les mémoires mortes reprogrammables à lecture seule (16), qui sont programmables à plusieurs reprises après la fabrication dudit circuit intégré ;
- les mémoires vives à accès aléatoire (17) ;
- les horloges (18) ;
- les périphériques (19, 110).

5. Circuit intégré selon l'une des revendications 1 à 4, caractérisé en ce que ledit programme générique (21) comprend également la mesure (25) de la vitesse de transmission de données de ladite station (111), de façon que lesdits moyens de communication (15) adaptent la vitesse de transmission de données dudit circuit intégré (11) à ladite vitesse de transmission de données de ladite station (111).

6. Circuit intégré selon l'une quelconque des revendications 1 à 5, caractérisé en ce que lesdits moyens de communication correspondent à une Unité Asynchrone de Réception/Transmission (15) dont seuls les signaux de réception et de transmission sont utilisés.

7. Circuit intégré selon l'une quelconque des revendications 1 à 6, caractérisé en ce que lesdits moyens de communication (15) comprennent une interface série et en ce que ledit programme générique (21), reçoit de ladite station (111), des messages d'activation soit d'une desdites fonctions élémentaires (22 à 24), soit d'une fonction (26) de positionnement d'un pointeur, et émet vers ladite station (111) des messages de résultat de l'activation d'une desdites fonctions élémentaires.

8. Circuit intégré selon la revendication 7, caractérisé en ce que lesdits messages d'activation appartiennent au groupe comprenant :
- les messages de spécification d'une adresse prédéterminée pour un pointeur courant, constitués chacun par, d'une part, un mot de commande de spécification d'adresse (51) dans lequel est codé le nombre d'octets de spécification et, d'autre part, au moins un mot de données (52 à 54) contenant lesdits octets de spécification;
- les messages de lecture d'une mémoire à partir de l'adresse du pointeur courant, constitués chacun par un mot de commande de lecture (61) dans lequel est codé un nombre d'octets à lire ;
- les messages d'écriture dans une mémoire à partir de l'adresse du pointeur courant, constitués chacun par, d'une part, un mot de commande d'écriture (71) dans lequel est codé un nombre d'octets à écrire et, d'autre part, au moins un mot de données (72 à 76) contenant lesdits octets à écrire ;
- les messages d'exécution d'un programme stocké dans une mémoire à partir de l'adresse du pointeur courant, constitués chacun par un mot de commande d'exécution (81).

9. Circuit intégré selon l'une quelconque des revendications 7 et 8, caractérisé en ce que chacun desdits messages de résultat est constitué d'au moins un mot de données (62 à 64) contenant des données lues.

10. Circuit intégré selon l'une quelconque des revendications 8 et 9, caractérisé en ce que chacun des mots de commande et des mots de données comprend au moins un élément binaire de départ (D), au moins un élément binaire de données utiles (31 ; 41) et au moins un élément binaire de stop (S1, S2).

11. Circuit intégré selon la revendication 10. caractérisé par ce que chacun desdits mots de commande comprend huit éléments binaires de données utiles (31) répartis en:
- deux éléments binaires (C1, C2) de codage du type de mot de commande ; et
- six éléments binaires (N1 à N6) de codage d'un nombre d'octets de spécification, d'octets à lire et d'octets à écrire selon que le mot de commande codé dans les deux autres éléments binaires est respectivement un mot de commande de spécification, un mot de commande de lecture ou un mot de commande d'écriture.

12. Circuit intégré selon l'une quelconque des revendications 1 à 11, caractérisé en ce qu'il comprend une broche de lancement dudit programme générique (21), ledit programme générique étant lancé lorsque ladite broche de lancement est excitée après que ledit circuit intégré a été réinitialisé.

13. Circuit intégré selon l'une des revendications 1 à 12, caractérisé en ce que ladite mémoire morte (14) contenant le programme générique est une mémoire morte masquée programmée par masque de façon définitive lors de la fabrication dudit circuit intégré (11).

14. Procédé de fabrication d'un circuit intégré du type microcontrôleur selon la revendication 13, caractérisé en ce qu'il comprend une étape de gravure de ladite mémoire morte masquée (14) contenant ledit programme générique (21).

15. Station de test (111) de circuit intégré (11) destinée à tester un circuit intégré selon l'une quelconque des revendications 1 à 13, caractérisée en ce qu'elle comprend des moyens d'émission de messages d'activation et de réception de messages de résultat selon l'une quelconque des revendications 7 à 12.

## Patentansprüche

1. Integrierte Schaltung vom Mikrocontroller-Typ, mit einem Prozessorkern (13), der in der Lage ist, Daten mit wenigstens einem Datenspeicher- und/oder -verarbeitungselement (16 bis 19, 110) auszutauschen, **dadurch gekennzeichnet,** daß die integrierte Schaltung (11) einen Nur-Lese-Festwertspeicher (14), der ein generisches Programm (21) enthält, das von dem Mikrocontroller (11) ausgeführt werden kann, und Kommunikationsmittel (15) umfaßt, die die Ausführung eines Dialogprotokolls zwischen dem generischen Programm (21) und einer Station (111) ermöglichen, die mit der integrierten Schaltung (11) verbunden ist, wobei das generische Programm (21) eine elementare Schreibfunktion (23) von Daten in dem oder den Datenspeicher- und/oder -verarbeitungselementen (16 bis 19, 110) aufweist und wobei die Schreibfunktion benutzt wird zum Laden eines Fernladeprogramms von der Station (111) in einen flüchtigen Speicher (17).

2. Integrierte Schaltung nach Anspruch 1, dadurch gekennzeichnet, daß das generische Programm ferner eine elementare Lesefunktion (22) zum Lesen von Daten umfaßt, die in dem oder den Datenspeicher- und/oder - verarbeitungselementen (16 bis 19, 110) gespeichert sind.

3. Integrierte Schaltung nach einem der Ansprüche 1 und 2, dadurch gekennzeichnet, daß das generische Programm ferner eine elementare Ausführungsfunktion (24) zum Ausführen eines Programms umfaßt, das in die Datenspeicher- und/oder -verarbeitungselemente (16 bis 19, 110) geschrieben ist.

4. Integrierte Schaltung nach einem beliebigen der Ansprüche 1 bis 3, dadurch gekennzeichnet, daß die Datenspeicher- und/oder -verarbeitungselemente zu der Gruppe gehören, die insbesondere umfaßt:
- umprogrammierbare Nur-Lese-Festwertspeicher (16), die nach der Herstellung der integrierten Schaltung mehrere Male programmierbar sind;
- flüchtige Speicher mit wahlfreiem Zugriff (17);
- Taktgeber (18);
- Peripherie (19, 110).

5. Integrierte Schaltung nach einem der Ansprüche 1 bis 4, dadurch gekennzeichnet, daß das generische Programm (21) auch das Messen (25) der Übertragungsgeschwindigkeit der Daten von der Station (111) umfaßt, so daß die Kommunikationsmittel (15) die Datenübertragungsgeschwindigkeit der integrierten Schaltung (11) an die Datenübertragungsgeschwindigkeit der station (111) anpassen.

6. Integrierte Schaltung nach einem beliebigen der Ansprüche 1 bis 5, dadurch gekennzeichnet, daß die Kommunikationsmittel einer TRAU (15) entsprechen, von der nur die Empfangs- und Sendesignale benutzt werden.

7. Integrierce Schaltung nach einem beliebigen der Ansprüche 1 bis 6, dadurch gekennzeichnet, daß die Kommunikationsmittel (15) eine serielle Schnittstelle umfassen und daß das generische Programm (21) von der station (111) Meldungen zur Aktivierung einer der elementaren Funktionen (22 bis 24) oder einer Zeigerpositionierungsfunktion (26) empfängt und an die Station (111) Meldungen über das Ergebnis der Aktivierung einer der elementaren Funktionen sendet.

8. Integrierte Schaltung nach Anspruch 7, dadurch gekennzeichnet, daß die Aktivierungsmeldungen zu der Gruppe gehören, welche umfaßt:
- Meldungen zur Spezifizierung einer vorgegebenen Adresse für einen laufenden Zeiger, die zum einen aus einem Adressenspezifikations-Befehlswort (51), in dem die Zahl der Spezifikationsbytes kodiert ist, und zum anderen aus wenigstens einem Datenwort (52 bis 54), das die Spezifikationsbytes enthält, gebildet ist;
- Meldungen zum Lesen eines Speichers ab der Adresse des laufenden Zeigers, die jeweils aus einem Lesebefehlswort (61) gebildet sind, in dem eine Zahl von zu lesenden Bytes kodiert ist;
- Meldungen zum Schreiben eines Speichers ab der Adresse des laufenden Zeigers, die jeweils zum einen aus einem Schreibbefehlswort (61), in dem eine Zahl von zu schreibenden Bytes kodiert ist, und zum anderen wenigstens einem Datenwort (72 bis 76), das die zu schreibenden Bytes enthält, gebildet ist;
- Meldungen zum Ausführen eines Programms, das in einem Speicher ab der Adresse des laufenden Zeigers gespeichert ist, die jeweils aus einem Ausführungsbefehlswort (81) bestehen.

9. Integrierte Schaltung nach einem beliebigen der Ansprüche 7 und 8, dadurch gekennzeichnet, daß jede der Ergebnismeldungen aus einem Datenwort (62 bis 64) besteht, das gelesene Daten enthält.

10. Integrierte Schaltung nach einem beliebigen der Ansprüche 8 und 9, dadurch gekennzeichnet, daß jedes Befehlswort und jedes Datenwort wenigstens ein Anfangsbit (D), wenigstens ein Nutzdatenbit (31; 41) und wenigstens ein Stopbit (S1; S2) umfaßt.

11. Integrierte Schaltung nach Anspruch 10, dadurch gekennzeichnet, daß jedes Befehlswort acht Nutzdatenbits (31) umfaßt, die verteilt sind auf:
- zwei Bits (C1, C2) zur Kodierung des Typs von Befehlswort; und
- sechs Bits (N1 bis N6) zur Kodierung einer Zahl von Spezifikationsbytes, zu lesenden Bytes und zu schreibenden Bytes, je nachdem, ob das in den zwei anderen Bits kodierte Befehlswort ein Spezifikationsbefehlswort, ein Lesebefehlswort oder ein Schreibbefehlswort ist.

12. Integrierte Schaltung nach einem beliebigen der Ansprüche 1 bis 11, dadurch gekennzeichnet, daß sie einen Auslöseanschluß des generischen Programms (21) umfaßt, wobei das generische Programm ausgelöst wird, wenn der Auslöseanschluß erregt wird, nachdem die integrierte Schaltung initialisiert worden ist.

13. Integrierte Schaltung nach einem beliebigen der Ansprüche 1 bis 12, dadurch gekennzeichnet, daß der Festwertspeicher (14), der das generische Programm enthält, ein maskierter, bei der Herstellung der integrierten Schaltung (11) definitiv maskenprogrammierter Festwertspeicher ist.

14. Verfahren zur Herstellung einer integrierten Schaltung nach Anspruch 13, dadurch gekennzeichnet, daß es einen Schritt des Ätzens des maskierten Festwertspeichers (14) umfaßt, der das generische Programm (21) enthält.

15. Teststation (111) für integrierte Schaltungen zum Testen einer integrierten Schaltung (11) nach einem beliebigen der Ansprüche 1 bis 13, dadurch gekennzeichnet, daß sie Mittel zum Senden von Aktivierungsmeldungen und zum Empfangen von Ergebnismeldungen nach einem beliebigen der Ansprüche 7 bis 12 umfaßt.

## Claims

1. Microcontroller integrated circuit comprising a processor core (13) adapted to exchange data with at least one data processing and/or storage device (16 through 19, 110),
characterised in that said integrated circuit (11) comprises a read only memory (14) containing a generic program (21) which can be executed by said microcontroller (11) and communication means (15) implementing a protocol for dialogue between said generic program (21) and a station (111) connected to said integrated circuit (11), said generic program (21) including a write basic function (23) for writing data in said data processing and/or storage devices (16 through 19, 110), said write function being used to load a downloading program from said station into random access memory (17).

2. Integrated circuit according to claim 1 characterised in that said generic program further includes a basic function of reading (22) data stored by said data processing and/or storage device or devices (16 through 19, 110).

3. Integrated circuit according to claim 1 or claim 2 characterised in that said generic program further includes a basic function of execution (24) of a program written in said data processing and/or storage device or devices (16 through 19, 110).

4. Integrated circuit according to any one of claims 1 to 3 characterised in that said data processing and/or storage device or devices are selected from the group including:
- reprogrammable read only memories (16) which can be programmed more than once after manufacture of said integrated circuit;
- random access memories (17);
- clocks (18);
- peripheral devices (19, 110).

5. Integrated circuit according to any one of claims 1 to 4 characterised in that said generic program (21) also comprises measurement (25) of the speed at which said station (111) transmits data so that said communication means (15) can match the speed of transmission of data from said integrated circuit (11) to said speed at which data is transmitted by said station (111).

6. Integrated circuit according to any one of claims 1 to 5 characterised in that said communication means are equivalent to an asynchronous receiver/transmitter (15) of which only the receive and transmit signals are used.

7. Integrated circuit according to any one of claims 1 to 6 characterised in that said communication means (15) comprise a serial interface and in that said generic program (21) receives from said station (111) messages for activating either one of said basic functions (22 through 24) or a pointer positioning function (26) and sends to said station (111) messages as to the results of activating one of said basic functions.

8. Integrated circuit according to claim 7 characterised in that said activation messages are selected from the group comprising:
- messages specifying a predetermined address for a current pointer, each message comprising an address specification command word (51) in which is encoded the number of specification bytes and at least one data word (52 through 54) containing said specification bytes;
- messages to read a memory from the current pointer address, each message comprising a read command word (61) in which a number of bytes to read is encoded;
- messages to write a memory from the current pointer address, each message comprising a write command word (71) in which is encoded a number of bytes to write and at least one data word (72 through 76) containing said bytes to write;
- messages to execute a program stored in a memory from the current pointer address, each message comprising an execute command word (81).

9. Integrated circuit according to claim 7 or claim 8 characterised in that each of said result messages comprises at least one data word (62 through 64) containing read data.

10. Integrated circuit according to claim 8 or claim 9 characterised in that each command word and each data word comprises at least one start bit (D), at least one data bit (31; 41) and at least one stop bit (S1, S2).

11. Integrated circuit according to claim 10 characterised in that each command word comprises eight data bits (31) as follows:
- two bits (C1, C2) encoding the command word type; and
- six bits (N1 through N6) coding a number of specification bytes, a number of bytes to read and a number of bytes to write according to whether the command word coded in the other two bits is respectively a specification command word, a read command word or a write command word.

12. Integrated circuit according to any one of claims 1 to 11 characterised in that it comprises a pin for starting said generic program (21), said generic program being started when said start pin is excited after said integrated circuit has been reinitialised.

13. Integrated circuit according to any one of claims 1 to 12 characterised in that said read only memory (14) containing the generic program is a mask-programmed read only memory programmed once and for all during manufacture of said integrated circuit (11).

14. Method of manufacturing a microcontroller integrated circuit according to claim 13 characterised in that it comprises a step of etching said mask-programmed read only memory (14) containing said generic program (21).

15. Integrated circuit test station (111) for testing an integrated circuit (11) according to any one of claims 1 to 13 characterised in that it comprises means for transmitting activation messages and means for receiving result messages according to any one of claims 7 through 12.
